Europäisches Patentamt

**European Patent Office**

Office européen des brevets

(19)

(11) Veröffentlichungsnummer: **0 057 938**
**B1**

(12) **EUROPÄISCHE PATENTSCHRIFT**

(45) Veröffentlichungstag der Patentschrift:
18.07.84

(21) Anmeldenummer: **82100949.5**

(22) Anmeldetag: **10.02.82**

(51) Int. Cl.³: **G 01 F 25/00,** G 01 F 1/34,
G 01 F 1/88

(54) **Vorrichtung zur Messung der Masse eines Fluidstromes.**

(30) Priorität: **11.02.81 DE 3104833**

(43) Veröffentlichungstag der Anmeldung:
**18.08.82 Patentblatt 82/33**

(45) Bekanntmachung des Hinweises auf die Patenterteilung:
**18.07.84 Patentblatt 84/29**

(84) Benannte Vertragsstaaten:
**AT BE CH DE FR GB IT LI NL SE**

(56) Entgegenhaltungen:
**GB - A - 1 576 274**

(73) Patentinhaber: **Linde Aktiengesellschaft,
Abraham-Lincoln-Strasse 21, D-6200 Wiesbaden (DE)**

(72) Erfinder: **Rosenmeier, Rudolf, Grünwalder Strasse 51,
D-8000 München 90 (DE)**

(74) Vertreter: **Schaefer, Gerhard, Dr., Linde
Aktiengesellschaft Zentrale Patentabteilung,
D-8023 Höllriegelskreuth (DE)**

## Beschreibung

Die Erfindung betrifft eine Vorrichtung zur Messung der Masse eines Fluidstromes mit einer einen Differenzdruckaufnehmer enthaltenden Meßeinrichtung und einer Schaltungsanordnung zur Verarbeitung des vom Differenzdruckaufnehmer kommenden Meßsignals, wobei die Schaltungsanordnung einen Rechner, einen Registrierteil für die Registrierung der errechneten Masse des Fluidstromes, einen Steuerungsteil für die Simulation von Meßwerten bei einem Prüfablauf und einen Steuerungsteil für den Meßbetrieb enthält und wobei der Steuerungsteil für den Meßbetrieb derart mit dem Steuerungsteil für den Prüfablauf gekoppelt ist, daß ein Meßbetrieb nur nach einem jeweils vorausgegangenen Prüfablauf durchgeführt werden kann.

Vorrichtungen der genannten Art, die auch unter der Bezeichnung Durchflußintegrator bekannt sind, werden zur Messung von Flüssigkeits- oder Gasströmen eingesetzt. Dabei wird der zu messende Fluidstrom ganz oder teilweise durch einen eine Druckdifferenz erzeugenden Leitungsteil geführt und der im strömenden Medium auftretende Druckabfall gemessen und zur Bestimmung des Massendurchsatzes herangezogen. Der Druckabfall kann beispielsweise beim Durchströmen einer Blende, einer Düse oder anderer geeigneter Leitungsteile auftreten. Die Verarbeitung des bei Differenzdruckmessung anfallenden Meßsignals kann beispielsweise unter Verwendung einer elektronischen Schaltung vorgenommen werden, die letztlich zu einer Anzeige der Masse des Fluidstroms führt.

Insbesondere wenn die Bestimmung der Masse des Fluidstroms Grundlage für die Berechnung des Preises eines abgegebenen Fluids ist, sind eine Reihe von Vorschriften zu beachten, die eine möglichst genaue Bestimmung der abgegebenen Masse gewährleisten sollen. So wird von derartigen Vorrichtungen unter anderem verlangt, daß ein solches Gerät vor Durchführung eines Meßvorganges jeweils einer Überprüfung der Funktionsfähigkeit des Gerätes durch Absolvierung eines Prüfablaufs unterzogen werden muß. Weitere Erfordernisse umfassen beispielsweise die Vorschrift, den ermittelten Meßwert mindestens zweifach zu registrieren und eine Überwachungseinrichtung vorzusehen, mit der Störungen des Betriebszustandes des Gerätes angezeigt werden. Für die Registrierung der Meßwerte kann dabei beispielsweise ein elektromagnetischer Zähler und ein mit einer elektronischen Zählvorrichtung verbundener Drucker eingesetzt werden.

Bei Einhaltung der vorstehenden Vorschriften ist im Normalfall eine exakte und sichere Ermittlung der Durchflußmasse möglich. Tritt dagegen während einer Messung ein Störfall auf, beispielsweise durch Ausfall der Stromversorgung für den Durchflußintegrator, dann ergeben sich Schwierigkeiten. Diese sind darauf zurückzuführen, daß der Durchflußintegrator bei der Wiederinbetriebnahme nach Wegfall der Störung entsprechend den erwähnten Vorschriften zunächst in den Prüfablauf-Betriebszustand zurückfällt, so daß eine Fortführung der Messung nur nach erneuter Durchführung eines Prüfablaufs möglich ist. Der Übergang in den Prüfablauf-Betriebszustand ist aber auch stets mit einer Löschung der Anzeigewerte im Registrierteil verbunden, so daß diese zuvor ermittelten Meßwerte verloren gehen.

Vermeidbar ist der völlige Meßwertverlust, sofern die Löschung der Meßergebnisse erst nach Betätigung einer Starttaste für den Prüfablauf erfolgt, da es dann noch möglich ist, den an einem Zähler ermittelten Meßwert zu notieren. Aber auch diese Möglichkeit ist bei Verwendung eines elektromagnetischen Zählers und eines Druckers für die zweifache Registrierung unbefriedigend, weil bei Eintritt der Störung meist nur der Meßwert am Zähler erhalten bleibt, während der Meßwert des Druckers dann sofort verloren geht. Da aber für den Abnehmer des Fluids der vom Drucker nach Beendigung der Fluidabgabe ausgedruckte Meßwert als Beleg für die abgegebene Masse angesehen wird, sind im Störungsfall auch bei einer Berücksichtigung des bei Eintritt der Störung vorliegenden Meßwerts Schwierigkeiten wegen des hinsichtlich der tatsächlichen Durchflußmenge irreführenden ausgedruckten Meßwerts zu erwarten.

Aufgabe der Erfindung ist es, eine Vorrichtung der eingangs genannten Art zu entwickeln, bei der die vorstehend genannten Schwierigkeiten auf möglichst einfache Weise unter Berücksichtigung der geltenden Vorschriften ausgeschaltet werden können.

Diese Aufgabe wird dadurch gelöst, daß die Schaltungsanordnung ein Bauteil zur Erhaltung des Meßbetrieb-Betriebszustandes während einer störungsbedingten Unterbrechung dieses Betriebszustandes enthält.

Erfindungsgemäß wird damit vorgeschlagen, die Beendigung des Meßbetrieb-Betriebszustands — und damit die Notwendigkeit eines erneuten Prüfablaufs vor weiterer Messung — nicht automatisch bei jeder beliebigen Unterbrechung des Meßbetriebs erfolgen zu lassen. Die Beendigung dieses Betriebszustandes wird vielmehr mit einem beliebigen anderen, für das tatsächliche Ende des Meßbetriebs charakteristischen Merkmal gekoppelt, beispielsweise mit der Auslösung des Druckers, der Unterbrechung einer Fluid-Übertragungsleitung oder anderer geeigneter Merkmale.

Durch die Erhaltung des Meßbetrieb-Betriebszustandes während einer Störung kann nach Beseitigung dieser Störung ohne weitere Verzögerungen sofort mit dem Meßbetrieb fortgefahren werden, ohne daß die vor Eintritt der Störung ermittelten Meßwerte verlorengehen.

Ein geeignetes Bauteil für die Erhaltung des Meßbetrieb-Betriebszustandes während einer Störung ist jeder remanente Speicher. In einer besonders bevorzugten einfachen Ausführung der Erfindung wird dabei ein selbsthaltendes Relais eingesetzt.

Die Bestimmung der Durchflußmasse eines Fluidstroms mit Hilfe eines Durchflußintegrators der beschriebenen Art ist im normalen Betriebsfall mit großer Genauigkeit möglich. Das vom Differenzdruckaufnehmer kommende Meßsignal ist jedoch bei einer Abnahme des Fluidstroms mit einer parallel dazu laufenden steigenden Ungenauigkeit behaftet. Zur Ermittlung eines zuverlässigen Meßwertes ist deshalb in weiterer Ausgestaltung der erfindungsgemäßen Vorrichtung vorgesehen, daß der Registrierteil des Durchflußintegrators bei Unterschreitung eines vorgegebenen minimalen Fluidstroms angehalten wird, wozu innerhalb der Schaltungsanordnung ein geeignetes Bauteil vorgesehen ist. Ein derartiges Bauteil kann beispielsweise das Ausgangssignal eines Spannungs-Frequenz-Wandlers, mit dem ein aus dem Rechner kommender, dem gemessenen Durchfluß analoger Spannungswert in eine für den Registrierteil verarbeitbare Impulsfolge umgewandelt wird, unterbrechen. Eine solche Unterbrechung hat darüber hinaus auch den Vorteil, daß die auch bei einer vollständigen Unterbrechung der Fluidförderung aus dem Rechner-Ausgang stets austretenden minimalen Spannungswerte nicht durch den Spannungs-Frequenz-Wandler an den Registrierteil weitergeleitet werden, wo sie zu einer zwar geringen, aber doch meßbaren Meßwertverfälschung führen würde.

Beim erfindungsgemäßen Durchflußintegrator wird der für die Bestimmung der Durchflußmasse benötigte Druckabfall durch einen Differenzdruckaufnehmer ermittelt, der den für ein bestimmtes Fluid charakteristischen Druckabfall beim Durchströmen eines bestimmten Leitungsteils mißt. Dazu kann beispielsweise der Druckabfall beim Durchströmen einer Blende oder einer Düse herangezogen werden. Aus dem gemessenen Druckabfall begibt sich dann der Massendurchfluß entsprechend der Gleichung $\dot{M} = c \sqrt{\rho \cdot \Delta p}$. (In dieser Gleichung ist $\dot{M}$ der Massenstrom des Fluids, $c$ eine von der Meßanordnung und dem zu messenden Fluid abhängige Konstante, in die beispielsweise die Viskosität des Fluids, aber auch die Querschnittsfläche des Meßrohres eingeht, $\rho$ die Dichte der Flüssigkeit und $\Delta p$ das Druckgefälle zwischen den Meßstellen des Differenzdruckaufnehmers.)

In einer besonders vorteilhaften Weiterbildung der Erfindung ist vorgesehen, den Durchflußintegrator für die Messung an verschiedenen Fluidströmen auszubilden. Als Leitungsteil für die Bestimmung des Druckabfalls werden in dieser Ausgestaltung der Erfindung vorzugsweise Düsen verwendet. Der Vorteil in der Verwendung von Düsen anstelle von einfachen Blenden liegt in der wesentlich günstigeren Strömungsführung in Düsen, die zu charakteristischen, nur vom Massendurchsatz, nicht aber vom jeweils verwendeten Strömungsmittel abhängenden Meßwerten führt. Während die Verwendung von Blenden zur Bestimmung des Druckabfalls wegen des für jedes Fluid unterschiedlichen Strömungsverhaltens getrennte Eichungen für jedes zu messende Fluid erfordern würde, liefert die Verwendung einer Düse vom jeweils verwendeten Fluid unabhängige Meßergebnisse, so daß eine einmalige Eichung der Vorrichtung unter Verwendung nur eines einzigen Fluids ausreichend ist.

Da bei der Messung verschiedener Fluidströme unterschiedliche Stoffkonstanten für die Bestimmung der Durchflußmasse aus dem Meßsignal benötigt werden, ist in weiterer Ausbildung der Erfindung ein Umschalter innerhalb der Schaltungsanordnung vorgesehen, der dem Rechner in Abhängigkeit vom jeweils zu messenden Fluidstrom spezifische Konstanten zuleitet.

Die erfindungsgemäße Vorrichtung besteht einerseits aus dem ein Meßsignal liefernden Differenzdruckaufnehmer und andererseits aus einer Schaltungsanordnung zur Verarbeitung dieses Meßsignals. Zwischen diesen beiden Bestandteilen besteht insofern eine feste Verbindung, als die Schaltungsanordnung jeweils in Verbindung mit einer ganz bestimmten Düse oder Blende für die Ausbildung des Differenzdrucks geeicht werden muß. Ein Auswechseln der Düse oder Blende erfordert damit einen erneuten Eichvorgang.

Die Verwendung von Düsen zur Erzeugung eines Differenzdrucks hat nicht nur den Vorteil, vom jeweils eingesetzten Fluid weitgehend unabhängige Meßwerte zu erhalten, sondern ist auch günstig, weil die Herstellung von Düsen im Gegensatz zur Herstellung von Blenden unter Einhaltung geringer Toleranzen bezüglich des Strömungsverhaltens möglich ist. Bei einem notwendigen Austausch einer Düse sind daher bei der erneuten Eichung des Gerätes im allgemeinen nur sehr geringe Korrekturen innerhalb der Schaltung erforderlich. Es ist deshalb in weiterer Ausgestaltung der Erfindung vorgesehen, innerhalb der Schaltungsanordnung einen Trimmer einzusetzen, mit dem der Einfluß von Düsentoleranzen auf das vom Druckaufnehmer kommende Meßsignal ausgeglichen werden kann. Da ein entsprechend korrigiertes Meßsignal jedoch bei der Durchführung eines Prüfablaufs zu falschen Prüfergebnissen führen kann, sofern der Trimmer die simulierten Meßwerte ebenfalls beeinflußt, ist für diesen Fall ein weiterer Umschalter zur Umgehung des Trimmers während eines Prüfablaufs vorgesehen.

Der von einem Differenzdruckaufnehmer ermittelte Druckabfall kann beispielsweise durch eine Druckmeßdose bestimmt werden, in die die vor und hinter einer Düse oder einer anderen Meßstelle auftretenden Absolutdrücke auf verschiedenen Seiten einer Membran geleitet werden, so daß die Auslenkung der Membran das vom Differenzdruckaufnehmer kommende Meßsignal liefert. Wenn entlang der Meßstrecke kein Druckabfall erfolgt, darf theoretisch keine Auslenkung der Membran auftreten und der Differenzdruckaufnehmer müßte den Meßwert »0« liefern. In der Praxis zeigt sich jedoch stets eine geringfügige Auslenkung der Membran, die sich in Abhängigkeit vom Absolutdruck verändert. Zur Bestimmung eines Nullsignals ist es deshalb erforderlich, in Abhängigkeit vom Absolutdruck des Fluidstroms eine Korrektur vorzunehmen. Hierzu ist in der erfindungsgemäßen Vorrichtung ein Umschalter vorgesehen, mit dem Korrekturschaltungen zur Berichtigung des Nullsignals eingeschaltet werden.

Die erfindungsgemäße Vorrichtung eignet sich beispielsweise zur Messung der Masse von aus einem Flüssigkeitstank, beispielsweise einem Tanklastzug, zu entnehmenden tiefsiedenden Flüssiggasen.

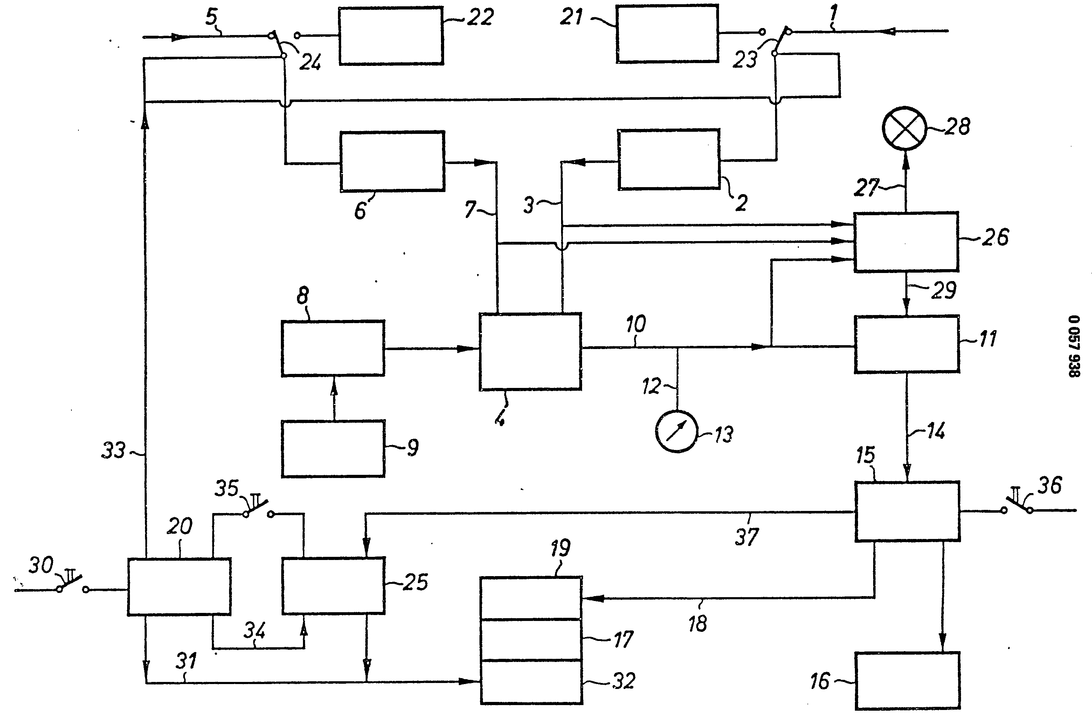

Die Erfindung ist nachstehend anhand eines in der Zeichnung schematisch dargestellten Ausführungsbeispiels näher erläutert. Dabei sind nicht unmittelbar mit der Erfindung in Zusammenhang stehende Schaltelemente weggelassen.

Das in der Figur dargestellte Ausführungsbeispiel der Erfindung beschränkt sich auf die Darstellung der Schaltungsanordnung zur Verarbeitung des Meßsignals, während die in üblicher Form vorgenommene Ermittlung des Meßsignals durch einen Differenzdruckaufnehmer nicht dargestellt ist. Das Ausführungsbeispiel bezieht sich insbesondere auf einen Durchflußintegrator zur Ermittlung der Durchflußmassen von tiefsiedenden Flüssigkeiten wie flüssigem Sauerstoff, Stickstoff oder Argon. Es kann jedoch ohne weiteres durch entsprechende Anpassungen von für die Errechnung der Durchflußmasse benötigten Konstanten auch auf andere Fluide ausgedehnt werden. Die Vorrichtung kann beispielsweise an einem auf einem Tankfahrzeug angeordnetem Flüssigkeitstank angebracht sein.

In der Schaltungsanordnung gelangen über Leitung 1 Meßsignale von einem nicht dargestellten Differenzdruckaufnehmer in einen Druckmeßverstärker 2. Das aus dem Druckmeßverstärker 2 über Leitung 3 austretende verstärkte Meßsignal wird an einen Eingang eines Rechners 4, beispielsweise eines Analogrechners, geführt.

Da zur Ermittlung der Durchflußmasse neben dem durch den Differenzdruckmesser ermittelten Druckabfall auch die Dichte des Fluids eine Rolle spielt, wird diese Größe ebenfalls gemessen. Da die Dichte eines bestimmten Fluids von der Temperatur dieses Mediums abhängt, wird zur Dichtebestimmung auf eine Temperaturmessung zurückgegriffen. Zur Temperaturmessung kann beispielsweise ein Widerstandsthermometer, ein Thermoelement oder andere geeignete Meßelemente verwendet werden. Ein bei der Temperaturmessung anfallendes Meßsignal wird über Leitung 5 herangeführt und in einer Schaltung 6 in eine für den Rechner 4 passende Größe umgeformt, die der Dichte des eingestellten Mediums entspricht. Der umgeformte Meßwert gelangt dann über Leitung 7 in einen weiteren Eingang des Rechners 4.

Über einen weiteren Eingang wird dem Rechner 4 eine medienspezifische Konstante eingegeben. Diese Konstante wird innerhalb der Schaltung 8 durch geeignete Einstellung des Umschalters 9 für verschiedene Medien eingestellt.

Aus den in den Rechner eintretenden Meßsignalen bildet dieser ein der zu messenden Durchflußmasse proportionales Spannungssignal, das über Leitung 10 austritt und in einen Spannungs-Frequenz-Wandler 11 eingespeist wird. Außerdem wird das Ausgangssignal des Rechners 4 über Leitung 12 zu einer Meßeinrichtung 13 geleitet, mit der der relative Flüssigkeitsstrom in Abhängigkeit von der maximalen Durchsatzmenge angezeigt wird.

Im Spannungs-Frequenz-Wandler 11 wird das aus dem Rechner 4 über Leitung 10 austretende Spannungssignal in eine Impulsfolge umgewandelt. Wegen der hohen Impulsdichte ist dabei ein in der Zeichnung nicht dargestellter Teiler vorgesehen, der die Impulsfolge in einer für den nachfolgenden Registrierteil der Schaltungsanordnung geeigneten Weise herabsetzt.

Das derart behandelte Meßergebnis wird dann über Leitung 14 in einen Schaltungsteil 15 geleitet, der eine Ansteuerung für einen Drucker 16 und einen Zähler 17 enthält. Die Ansteuerung für den Zähler 17 über Leitung 18 erfolgt dabei durch Aufgabe des Zählimpulses auf einen Zählmagneten 19.

Weiterhin enthält die dargestellte Schaltungsanordnung einen Steuerungsteil 20 zur Durchführung eines Prüfablaufs. Für den Prüfablauf sind außerdem zur Simulation von Meßwerten eine Ersatzbrücke 21 sowie Ersatzwiderstände 22 vorgesehen, die während eines Prüfablaufs durch Betätigung der Schalter 23 und 24 mit dem Druckmeßverstärker 2 bzw. der Schaltung 6 verbunden sind.

Weiterhin enthält die Schaltungsanordnung einen Steuerungsteil 25 zur Durchführung des Meßbetriebs sowie eine Überwachungseinrichtung 26, die sowohl die in den Rechner 4 eintretenden Meßsignale als auch das aus den Rechner 4 gewonnene Meßergebnis überwacht. Bei Auftreten eines Fehlers in der Anordnung wird über Leitung 27 eine Warnanlage 28 ausgelöst. Die Überwachungseinrichtung 26 registriert auch die relative Durchflußmenge des zu messenden Flüssigkeitsstroms. Da der Meßfehler bei geringen Flüssigkeitsströmen, beispielsweise bei einem nur etwa 10% der maximalen Fördermenge ausmachenden Flüssigkeitsstrom relativ groß wird, wird im Falle des Unterschreitens einer solchen minimalen Durchflußmenge über Leitung 29 ein Signal von der Überwachungseinrichtung 26 an den Spannungs-Frequenz-Wandler 11 gegeben, wodurch der Ausgang 14 dieser Komponente gesperrt wird. Damit können also keine mit relativ großen Fehlern behaftete Meßwerte an den Registrierteil der Schaltungsanordnung gelangen.

Wird die dargestellte Schaltungsanordnung in Betrieb genommen, so befindet sie sich zunächst im Prüfablauf-Betriebszustand. Der eigentliche Prüfablauf wird dann durch Betätigung der Taste 30 ausgelöst. Das Auslösen der Taste 30 bewirkt zunächst, daß die Steuerung 20 über Leitung 31 ein Signal an den Nullstellmagnet 32 des Zählers abgibt. Zugleich wird über die Leitung 33 ein Impuls an die Schalter 23 und 24 gegeben, wodurch die Ersatzwerte 21 bzw. 22 für den Prüfablauf an die Verstärker 2 und 6 angeschlossen werden.

Nach Beendigung der Umschaltung und des Nullstell-Vorgangs am Zähler beginnt eine Prüfzeit von beispeilsweise 100 s abzulaufen. Während dieser Zeit wird der Rechner 4 durch die aus den Ersatzwerten 21, 22 für den Druck bzw. für die Temperatur resultierenden Spannungen angesteuert. Die Ersatzwerte simulieren die mittlere Dichte und den maximalen Druck des zu messenden Mediums. Im Prüfablauf wird die gesamte Meßelektronik überprüft. Nach Ablauf der Prüfzeit zeigt der Zähler 17 eine dem am Umschalter 9 eingestellten Medium entsprechende Durchflußmenge an. An diesem angezeigten Wert kann die Genauigkeit der Elektronik bewertet werden. Der Drucker 16 wird während des Prüfablaufes nicht angesteuert.

Nach Beendigung des Prüfablaufs wird über Leitung 33 durch ein weiteres Signal eine Umschaltung der Schalter 23 und 24 vorgenommen, so daß die Verstärker 2 und 6 nunmehr die über Leitungen 1 und 5 herangeführten Meßwerte verarbeiten. Außerdem gelangt über Leitung 34 bei Beendigung des Prüfablaufs ein Signal in den Steuerungsteil 25 für den Meßbetrieb, der die gesamte Anlage für den Meßbetrieb vorbereitet.

Erst nach vorangegangenem Prüfablauf kann durch Betätigung der Taste 35 das Gerät auf den Meßbetrieb gestellt werden. Beim Drücken der Taste 35 wird zuerst der Zähler 17 durch Ansteuerung des Nullstellmagneten 32 auf »0« gestellt. Danach werden die anstehenden Meßwerte verarbeitet und in Form von Zählimpulsen auf den Zähler und den Drucker gegeben. Soll die Messung beendet werden, so wird durch Betätigung der Taste 36 ein Druckvorgang am Drucker 16 ausgelöst. Gleichzeitig damit wird von der Schaltung 15 über Leitung 37 ein Signal an die Steuerung 25 des Meßbetriebs gegeben, wodurch der Betriebszustand des Messens beendet ist. Nachdem der Drucker 16 den Meßwert ausgedruckt hat, wird er automatisch in seine Nullposition gestellt, während die Anzeige am Zähler 17 erhalten bleibt. Ein erneuter Meßvorgang ist erst nach einem neuen Prüfablauf möglich.

Im Fall einer Unterbrechung des Meßbetriebs, beispielsweise durch Ausfall der Spannungsversorgung für die Schaltungsanordnung, wird das Gerät bei Weiterführung der Messung nicht automatisch in einen Betriebszustand zurückversetzt, der bei Wiederinbetriebnahme zunächst einen neuen Prüfablauf erfordert, da innerhalb des Steuerungsteils 25 für den Meßbetrieb ein remanenter Speicher, insbesondere ein selbsthaltendes Relais, enthalten ist. Durch die Verwendung dieses Speichers bleibt der Betriebszustand des Messens unabhängig von der Spannungsversorgung für die Schaltungsanordnung erhalten und wird lediglich durch die Betätigung des Druckers 16 beendet, da in diesem Fall das über Leitung 37 herangeführte Signal eine Beendigung des Meßzustandes zur Folge hat.

**Patentansprüche**

1. Vorrichtung zur Messung der Masse eines Fluidstromes mit einer einen Differenzdruckaufnehmer enthaltenden Meßeinrichtung und einer Schaltungsanordnung zur Verarbeitung des vom Differenzdruckaufnehmer kommenden Meßsignals, wobei die Schaltungsanordnung einen Rechner (4), einen Registrierteil (16, 17) für die Registrierung der errechneten Masse des Fluidstromes, einen Steuerungsteil (20) für die Simulation von Meßwerten bei einem Prüfablauf und einen Steuerungsteil (25) für den Meßbetrieb enthält und wobei der Steuerungsteil (25) für den Meßbetrieb derart mit dem Steuerungsteil (20) für den Prüfablauf gekoppelt ist, daß ein Meßbetrieb nur nach einem jeweils vorausgegangenen Prüfablauf durchgeführt werden kann, dadurch gekennzeichnet, daß die Schaltungsanordnung ein Bauteil zur Erhaltung des Meßbetrieb-Betriebszustandes während einer störungsbedingten Unterbrechung dieses Betriebszustandes enthält.

2. Vorrichtung nach Anspruch 1, dadurch gekennzeichnet, daß das Bauteil ein remanenter Speicher ist.

3. Vorrichtung nach Anspruch 1 oder 2, dadurch gekennzeichnet, daß das Bauteil ein selbsthaltendes Relais ist.

4. Vorrichtung nach einem der Ansprüche 1 bis 3, dadurch gekennzeichnet, daß der Registrierteil einen elektromagnetischen Zähler (17) und einen Drucker (16) enthält, und daß durch Betätigen des Druckers der Meßbetrieb beendet wird.

5. Vorrichtung nach einem der Ansprüche 1 bis 4, dadurch gekennzeichnet, daß die Schaltungsanordnung ein Bauteil zum Anhalten des Registrierteils bei Unterschreitung eines vorgegebenen minimalen Fluidstromes enthält.

6. Vorrichtung nach einem der Ansprüche 1 bis 5, dadurch gekennzeichnet, daß der Differenzdruckaufnehmer eine Düse und eine Meßeinrichtung zur Messung des Druckabfalls des Fluidstromes beim Durchströmen der Düse enthält.

7. Vorrichtung nach einem der Ansprüche 1 bis 6, dadurch gekennzeichnet, daß die Schaltungsanordnung einen Umschalter (9) enthält, durch den dem Rechner (4) in Abhängigkeit von dem zu messenden Fluid spezifische Größen zugeleitet werden.

8. Vorrichtung nach Anspruch 6, dadurch gekennzeichnet, daß die Schaltungsanordnung einen Trimmer zum Ausgleich von Düsentoleranzen und einen Umschalter zur Umgehung des Trimmers während eines Prüfablaufs enthält.

9. Vorrichtung nach einem der Ansprüche 1 bis 8, dadurch gekennzeichnet, daß die Schaltungsanordnung einen Umschalter zur Korrektur des vom Differenzdruckaufnehmer kommenden Meßsignals in Abhängigkeit vom Absolutdruck des Fluidstroms enthält.

## Claims

1. Apparatus for measuring the mass of a fluid stream comprising a measuring device containing a differential pressure sensor, and a circuit arrangement for processing the measuring signal coming from the differential pressure sensor, where the circuit arrangement comprises a computer (4), a recording component (16, 17) for recording the calculated mass of the fluid stream, a control component (20) for simulating measured values in a test run and a control component (25) for the measuring operation; and where the control component (25) for the measuring operation is coupled to the control component for the test run in such a way that a measuring operation can in each case only be carried out after a preceding test run, characterised in that the circuit arrangement includes a component for maintaining the measuring operation oprating state during an interruption of this operating state due to disturbance.

2. Apparatus according to claim 1, characterised in that the component is a non-volatile memory.

3. Apparatus according to claim 1 or claim 2, characterised in that the component is a self-locking relay.

4. Apparatus according to one of claims 1 to 3, characterised in that the recording component comprises an electro-magnetic counter (17) and a printer (16), and that the measuring operation is terminated by operating the printer.

5. Apparatus according to one of claims 1 to 4, characterised in that the circuit arrangement includes a component for stopping the recording component on falling below a predetermined minimal fluid stream.

6. Apparatus according to one of claims 1 to 5, characterised in that the differential pressure sensor comprises a nozzle and a measuring device for measuring the drop in pressure of the fluid stream when flowing through the nozzle.

7. Apparatus according to one of claims 1 to 6, characterised in that the circuit arrangement includes a selector switch (9), by means of which the computer (4) is supplied with specific quantities in dependence upon the fluid to be measured.

8. Apparatus according to Claim 6, characterised in that the circuit arrangement comprises a trimmer for compensating for nozzle tolerances and a change-over switch for by-passing the trimmer during a test run.

9. Apparatus according to one of claims 1 to 8, characterised in that the circuit arrangement comprises a selector switch for correcting the measuring signal which comes from the differential pressure sensor, in dependence upon the absolute pressure of the fluid current.

## Revendications

1. Dispositif pour mesurer la masse d'un courant de fluide, comportant une installation de mesure contenant un capteur de pression différentielle ainsi qu'un circuit pour traiter le signal de mesure provenant du capteur de pression différentielle, le circuit comportant un calculateur (4), une partie d'enregistrement (16, 17) pour assurer l'enregistrement de la masse calculée du courant de fluide, une partie de commande (20) pour la simulation des valeurs de mesure dans un processus de contrôle et une partie de commande (25) de l'opération de mesure, la partie de commande (25) d l'opération de mesure étant reliée à la partie de commande du processus de contrôle de manière qu'une opération de mesure ne puisse être exécutée qu'après un processus de contrôle respectif précédent, caractérisé en ce que le circuit contient un composant pour maintenir la condition opérationelle de mesure pedant une interruption intempestive de cette condition de fonctionnement.

2. Dispositif selon la revendication 1, caractérisé en ce que le composant est un moyen d'accumulation rémanente.

3. Dispositif selon l'une des revendications 1 ou 2, caractérisé en ce que le composant est un relais à maintien automatique.

4. Dispositif selon l'une des revendications 1 à 3, caractérisé en ce que la partie d'enregistrement contient un compteur électromagnétique (17) et une imprimante (16) et en ce que l'opération de mesure est arrêtée par actionnement de l'imprimante.

5. Dispositif selon l'une des revendications 1 à 4, caractérisé en ce que le circuit contient un composant pour arrêter la partie d'enregistrement lorsque l'on tombe en-dessous d'un débit de fluide minimal prédéterminé.

6. Dispositif selon l'une des revendications 1 à 5, caractérisé en ce que le capteur de pression différentielle contient une buse et une installation de mesure pour la mesure de la baisse de pression du courant de fluide à la traversée de la buse.

7. Dispositif selon l'une des revendications 1 à 6, caractérisé en ce que le circuit contient un commutateur (9) par lequel le calculateur (4) reçoit des grandeurs spécifiques en fonction du fluide à mesurer.

8. Dispositif selon la revendication 6, caractérisé en ce que le circuit contient un compensateur pour compenser des tolérances de buses et un commutateur pour contourner le compensateur pendant un processus de contrôle.

9. Dispositif selon l'une des revendications 1 à 8, caractérisé en ce que le circuit continent un commutateur pour corriger le signal de mesure provenant du capteur de pression différentielle en fonction de la pression absolue du courant de fluide.